# EUROPEAN PATENT APPLICATION

(11) **EP 3 451 272 A1**
(43) Date of publication of application: **06.03.2019**
(21) Application number: 18191676.8
(22) Date of filing: 30.08.2018
(51) Int. Cl.: G06Q 40/04

(54) **INSPECTION SUPPORT PORGRAM, APPARATUS, AND METHOD**

(30) Priority: 04.09.2017 JP 2017169414
(71) Applicant: FUJITSU LIMITED, Kanagawa 211-8588 (JP)
(72) Inventor: Matsumoto, Tomoko, Kanagawa, 211-8588 (JP); Kurose, Tatsuya, Kanagawa, 211-8588 (JP); Ikegami, Akihiro, Kanagawa, 211-8588 (JP)
(74) Representative: Hoffmann Eitle

(57) **Abstract**

A computer-readable recording medium storing a program causes a computer to execute a process that includes: identifying a start point of an acquisition-target period of a stock-trading history of a specific company based on at least one of a trend of a stock price of the company prior to a timing of a specific-information disclosure in the company and a timing of an information disclosure prior to the specific-information disclosure; acquiring the stock-trading history of the company within a period starting from the identified start point; and referring to a storage section that stores trend information of a stock price of the company and a timing of information disclosure relating to the company, and selectively acquiring selling or buying transaction information of stocks of the company in accordance with a direction of fluctuations of the stock price of the company after the timing of the specific-information disclosure.

## Description

### FIELD

The embodiments discussed herein are related to an inspection support program, an inspection support apparatus, and an inspection support method.

### BACKGROUND

In the inspection of illegal transactions such as insider trading a determination of whether the illegal transactions has been actually made is performed based on, for example, information of the trading of stocks by a stockholder (including a person) who is deemed to have made a transaction and the disclosure status of information relating to the traded stocks.

In addition, a stock information display method has been offered in which what kinds of news are there in the stock price chart may be easily recognized by the chart, and the user may easily recognize points of the chart associated with the news article display and the headline display.

Related techniques are disclosed in, for example, Japanese Laid-open Patent Publication No. 2002-352026.

### SUMMARY

In the case of inspecting presence or absence of illegal transactions, when there is information such as internal accusation, it is sufficient to inspect the situation of transactions of a suspicious stockholder (including a person) based on the information. When such information may not be obtained, there is a possibility of being overlooked even if illegal transactions have been made. In order not to overlook such illegal transactions, it is conceivable to monitor all transactions and determine whether they are illegal transactions. However, since determination of whether illegal transactions are actually made is performed by referring to trends in stock prices, the status of transactions, the state of disclosure of information, and the like, it is not realistic to monitor all transactions, and check presence or absence of the illegal transactions.

As one aspect, one object is to support an inspection of illegal tra nsactions.

According to one aspect of the invention, a computer-readable recording medium storing a program causes a computer to execute a process, the process including: identifying a start point of an acquisition target period of a stock trading history of a specific company based on at least one of a trend of a stock price of the specific company prior to a timing of a specific-information disclosure in the specific company and a timing of an information disclosure prior to the specific information disclosure; acquiring the stock trading history of the specific company within a period starting from the identified start point; and referring to a storage section that stores trend information of a stock price of the specific company and a timing of information disclosure relating to the specific company, and selectively acquiring selling transaction information or buying transaction information of stocks of the specific company in accordance with a direction of fluctuations of the stock price of the specific company after the timing of the specific information disclosure.

### BRIEF DESCRIPTION OF DRAWINGS

FIG. 1 is a functional block diagram of an inspection support apparatus according to a first embodiment and a second embodiment;
FIG. 2 is a diagram depicting an example of a stock price information database (DB);
FIG. 3 is a diagram depicting an example of a timely disclosure information DB;
FIG. 4 is a diagram depicting an example of a trading history DB;
FIG. 5 is a diagram for explaining identification of a start point of an acquisition target period;
FIG. 6 is a block diagram depicting a schematic configuration of a computer functioning as an inspection support apparatus according to the first embodiment, the second embodiment, and a third embodiment;
FIG. 7 is a flowchart depicting an example of inspection support processing according to the first embodiment;
FIG. 8 is a diagram for explaining a plurality of acquisition target periods;
FIG. 9 is a flowchart depicting an example of inspection support processing according to the second embodiment;
FIG. 10 is a functional block diagram of an inspection support apparatus according to the third embodiment;
FIG. 11 is a diagram depicting an example of a stockholder-related DB;
FIG. 12 is a flowchart depicting an example of inspection support processing according to the third embodiment;
FIG. 13 is a functional block diagram of an inspection support apparatus according to a fourth embodiment;
FIG. 14 is a diagram depicting an example of a designation screen;
FIG. 15 is a diagram depicting an example of an identification screen;
FIG. 16 is a block diagram depicting a schematic configuration of a computer functioning as the inspection support apparatus according to the fourth embodiment; and
FIG. 17 is a flowchart depicting an example of inspection support processing according to the fourth embodiment.

### DESCRIPTION OF EMBODIMENTS

Hereinafter, an example of embodiments will be described in detail with reference to the drawings. In each of the following embodiments, a case where an inspection of an insider trading as an illegal transaction of stocks is supported will be described as an example.

### First Embodiment

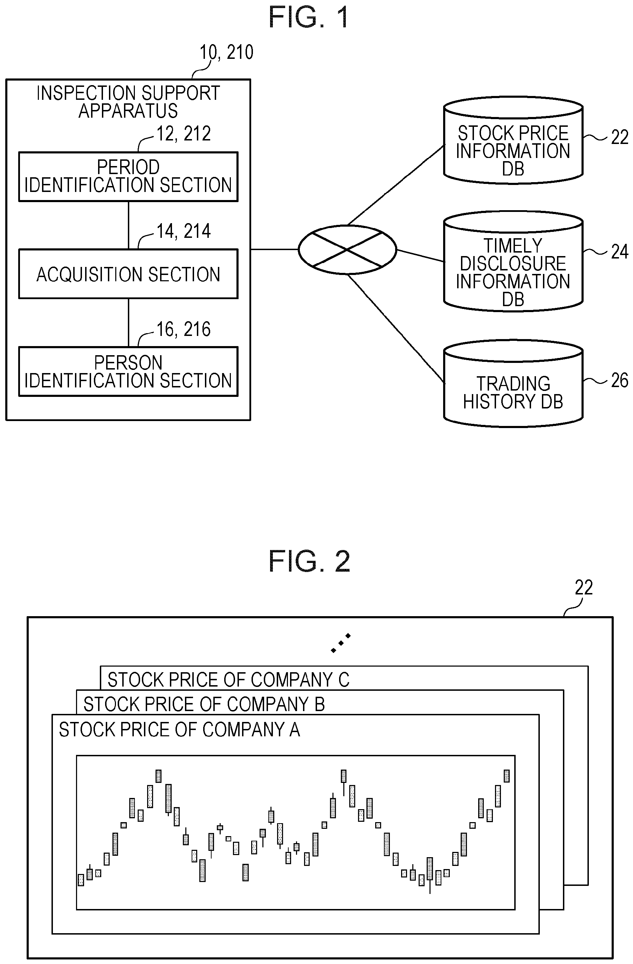

As depicted in FIG. 1, an inspection support apparatus 10 according to a first embodiment functionally includes a period identification section 12, an acquisition section 14, and a stockholder identification section (person identification section) 16. The inspection support apparatus 10 acquires information from each of a stock price information DB 22, a timely disclosure information DB 24, and a trading history DB 26, which are external databases (DB), via the network.

The stock price information DB 22 is an external database that stores stock price information that may be browsed and downloaded via websites of securities companies or the like. The stock price information is time series data of stock prices including, for example, opening price, high price, low price, closing price, and turnover, and stock price information of each listed company is stored in the stock price information DB 22. FIG. 2 depicts an example of the stock price information DB 22. FIG. 2 depicts an example in which stock price information in time series for each company is converted into a graph (stock price chart).

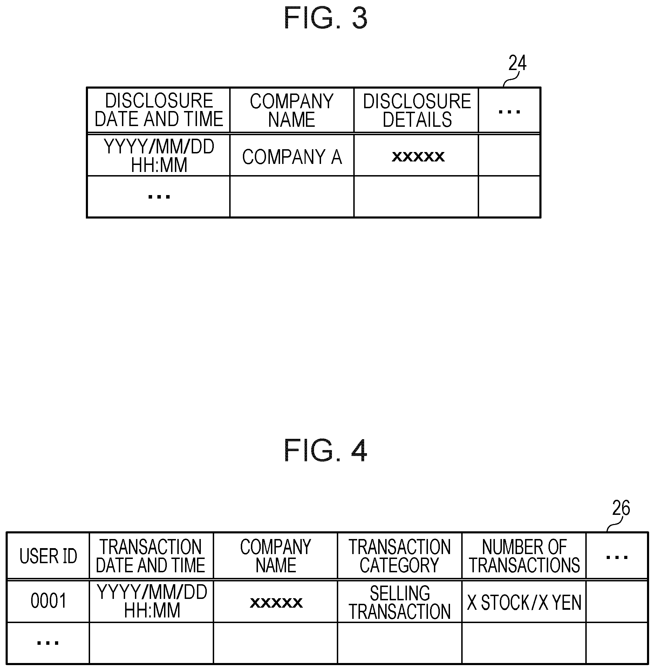

The timely disclosure information DB 24 is an external database that stores timely disclosure information that may be browsed and downloaded via the website of the timely disclosure information browsing service (TDnet) or the like. Timely disclosure information is important information that has a serious effect on stock prices, such as mergers and acquisitions of companies, personnel affairs, issuance of new stocks, and is obliged to be disclosed on a timely basis. FIG. 3 depicts an example of the timely disclosure information DB 24. In the example of FIG. 3, each row (each record) corresponds to one piece of timely disclosure information, and each timely disclosure information includes disclosure date and time on which the timely disclosure information is disclosed, company name of the target company, disclosure details indicating the content of the information, and the like. Note that the timely disclosure information DB 24 is not limited to the TDnet, and may be a collection of news, information of the homepage of each company, and the like.

The trading history DB 26 is, for example, a database held by a securities company or the like, and is a database in which trading history information of stock trading is stored. The inspection support apparatus 10 may access, for example, only data that the user has the right to access in the trading history DB 26 via a secure communication path. FIG. 4 depicts an example of the trading history DB 26. In the example of FIG. 4, each row (each record) corresponds to one piece of trading history information. Each trading history information includes, a user ID, which is identification information of a user who carries out trading, a transaction date and time, a company name, which is the name of a traded stock, a transaction category indicating whether a transaction is a selling transaction or a buying transaction, the number of transactions indicating the number or the amount of traded stocks, and the like.

Note that each database is not limited to the external database. The database may be independently registered and managed by the inspection support apparatus 10. In addition, information may be periodically acquired from an external database, and each of the stock price information DB 22, the timely disclosure information DB 24, and the trading history DB 26 may be stored in a predetermined area of the inspection support apparatus 10.

The period identification section 12 accepts an input of the company name of the company to be inspected and acquires from the stock price information DB 22 stock price information for a predetermined period (for example, one week, one month, three months, and so on) about the company to be inspected. In addition, the period identification section 12 acquires from the timely disclosure information DB 24 the timely disclosure information about the company to be inspected.

In addition, the period identification section 12 identifies the start point of the acquisition target period of the trading history information of stocks about the specific company. Specifically, the period identification section 12 identifies the start point of the acquisition target period based on at least one of the trend of the stock price of the company prior to the disclosure timing of timely disclosure information about a specific company, and the disclosure timing of timely disclosure information prior to the timely disclosure information.

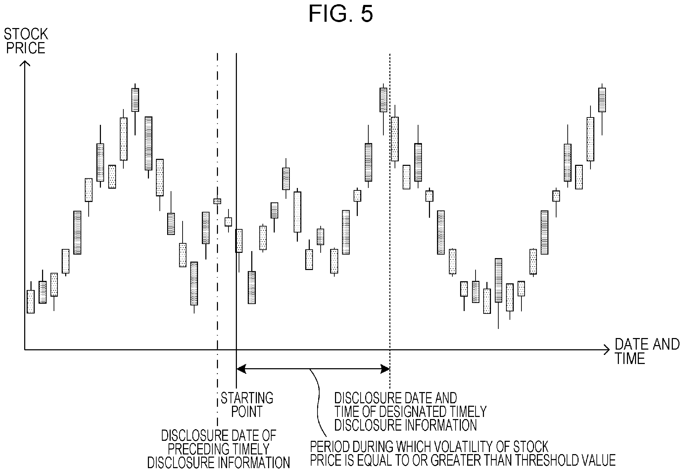

For example, the period identification section 12, as depicted in FIG. 5, in a period before the disclosure date and time (the dotted line part in FIG. 5) of the acquired timely disclosure information, identifies a period in which the volatility of the stock price in a predetermined time unit (for example, one hour unit) is equal to or more than a predetermined threshold value. Then, the period identification section 12 may identify as the start point of the acquisition target period the start date and time of the period in which the volatility of the stock price is equal to or greater than the threshold value. The threshold value is determined in advance from, for example, the average of the volatility of the stock price of the company for a predetermined time unit. By identifying the start point so as to include the period in which the volatility of the stock price is equal to or more than the threshold value in the acquisition target period, the possibility that the trading history information during the acquisition target period includes information indicating that the illegal transaction might be performed increases.

In addition, for example, when a plurality of pieces of timely disclosure information are acquired, the period identification section 12 accepts designation of the timely disclosure information to be noted in the inspection among the plurality of pieces of timely disclosure information. Then, the period identification section 12 identifies the date and time that is a predetermined time later than the disclosure date and time (the one-dotted broken line portion in FIG. 5) of the timely disclosure information prior to the noted timely disclosure information (the disclosure date and time is earlier) as the start point of the acquisition target period. By setting the date and time after the preceding timely disclosure information as the start point of the acquisition target period, it is possible to avoid the trading history information indicating that there is a possibility of an illegal transaction relating to each of the timely disclosure information from being acquired while the trading history information is in a mixed manner.

In addition, for example, when the noted timely disclosure information and the preceding timely disclosure information are relating to each other, the period identification section 12 may identify, as the start point of the acquisition target period, the date and time which is a predetermined time earlier than the disclosure date and time of the timely disclosure information prior to the noted timely disclosure information. In this case, designation of presence/absence of association between the two pieces of timely disclosure information may be accepted.

Note that the period identification section 12 may identify the start point based on either the period during which the volatility of the stock price is equal to or greater than the threshold value or the disclosure timing of the preceding timely disclosure information, or identify, as the start point, the earlier date and time or the later date and time among the date and time based on the above period or the above disclosure timing.

The period identification section 12 also identifies the end point of the acquisition target period as in the case of the start point. Specifically, the period identification section 12 identifies the end point of the acquisition target period based on at least one of the trend of the stock price of a specific company after the disclosure timing of the timely disclosure information of the specific company, and the disclosure timing of timely disclosure information following the above timely disclosure information.

For example, during the period after the disclosure date and time of the acquired timely disclosure information, the period identification section 12 may identify, as the end point of the acquisition target period, the date and time when the stock price fell to or below the predetermined threshold value. In addition, for example, when a plurality of timely disclosure information is acquired, the period identification section 12 may identify, as the end point of the acquisition target period, the date and time which is a predetermined time earlier than the disclosure date and time of the timely disclosure information following the noted timely disclosure information (the disclosure date and time is later). Note that when it is unnecessary to consider transactions after the disclosure of the noted timely disclosure information, the period identification section 12 may identify the disclosure date and time of the noted timely disclosure information as the end point of the acquisition target period.

By identifying the start point and the end point as described above, the period identification section 12 identifies the acquisition target period during which the trading history information is acquired. Note that the present embodiment is not limited to the case where both the start point and the end point are identified. Only the start point or only the end point may be identified. In this case, a predetermined period from the start point or a predetermined period up to the end point may be identified as the acquisition target period.

The acquisition section 14 acquires from the trading history DB 26 the trading history information in which the transaction date and time is included in the acquisition target period identified by the period identification section 12. In addition, when the stock price after the disclosure of the timely disclosure information has risen, the acquisition section 14 selectively acquires the trading history information in the transaction category of a buying transaction among the trading history information. In addition, when the stock price after the disclosure of the timely disclosure information has fallen, the acquisition section 14 selectively acquires the trading history information in the transaction category of a selling transaction among the trading history information.

The stockholder identification section 16 identifies a stockholder (including a person) who has purchased and sold a predetermined number of or a predetermined amount of or more stocks based on the trading history information of the stock acquired by the acquisition section 14. Specifically, the stockholder identification section 16 identifies as a stockholder (including a person) suspected of insider trading the stockholder indicated by the user ID included in the trading history information in which the number of transactions is equal to or more than the predetermined number or the amount of transactions is equal to or more than the predetermined amount among the acquired trading history information, and outputs the information of the stockholder. For example, when a user information DB storing user information including information such as the name, gender, and affiliation of each user associated with the user ID may be held or used, the stockholder identification section 16 may output the information acquired from the user information DB using the identified user ID as a key.

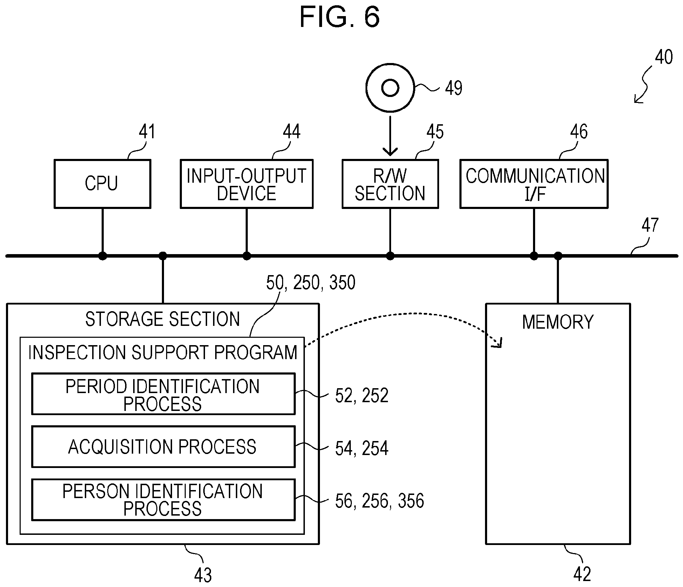

The inspection support apparatus 10 may be implemented using, for example, a computer 40 depicted in FIG. 6. The computer 40 includes a central processing unit (CPU) 41, a random-access memory 42 as a temporary storage area, and a nonvolatile storage section 43. In addition, the computer 40 includes an input-output device 44 such as an input device and a display device, a read/write (R/W) section 45 for controlling reading and writing of data to and from a storage medium 49, and a communication interface (I/F) 46 connected to a network such as the Internet. The CPU 41, the random-access memory 42, the storage section 43, the input-output device 44, the R/W section 45, and the communication I/F 46 are connected to each other via a bus 47.

The storage section 43 may be a hard disk drive (HDD), a solid state drive (SSD), a flash memory, or the like. The storage section 43 as a storage medium stores an inspection support program 50 for causing the computer 40 to function as the inspection support apparatus 10. The inspection support program 50 includes a period identification process 52, an acquisition process 54, and a stockholder identification process (person identification process) 56.

The CPU 41 reads out the inspection support program 50 from the storage section 43, develops the inspection support program 50 in the random-access memory 42, and sequentially executes the processes of the inspection support program 50. The CPU 41 operates as the period identification section 12 depicted in FIG. 1 by executing the period identification process 52. In addition, the CPU 41 operates as the acquisition section 14 depicted in FIG. 1 by executing the acquisition process 54. In addition, the CPU 41 operates as the stockholder identification section 16 depicted in FIG. 1 by executing the stockholder identification process 56. As a result, the computer 40 that has executed the inspection support program 50 functions as the inspection support apparatus 10. Note that the CPU 41 that executes the program is hardware.

Note that the function implemented by the inspection support program 50 may also be implemented by, for example, a semiconductor integrated circuit, more specifically, an application specific integrated circuit (ASIC) or the like.

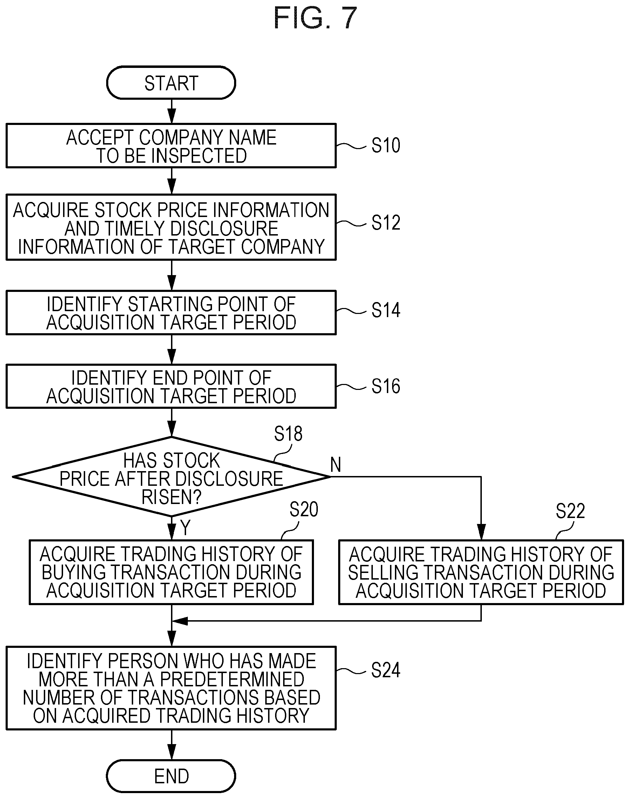

Next, the operation of the inspection support apparatus 10 according to the first embodiment will be described. When the company name of the company to be inspected is input to the inspection support apparatus 10 and the inspection support apparatus 10 is instructed to execute an inspection support process for insider trading, the inspection support apparatus 10 executes the inspection support processing depicted in FIG. 7. Note that the inspection support processing is an example of the inspection support method of the present embodiment.

In step S10, the period identification section 12 accepts the company name of the company to be inspected which has been input. Next, in step S12, the period identification section 12 acquires from the stock price information DB 22 stock price information for a predetermined period of time (for example, one week, one month, three months, and so on) about the company to be inspected. In addition, the period identification section 12 acquires from the timely disclosure information DB 24 the timely disclosure information about the company to be inspected. Note that the period identification section 12 acquires timely disclosure information in which the disclosure date and time is included in the predetermined period during which the stock price information is acquired.

Next, in step S14, the period identification section 12 identifies the start point of the acquisition target period based on at least one of the trend of the stock price of the company to be inspected prior to the disclosure timing of acquired timely disclosure information, and the disclosure timing of timely disclosure information prior to the noted timely disclosure information.

Next, in step S16, the period identification section 12 identifies the end point of the acquisition target period based on at least one of the trend of the stock price of the company to be inspected after the disclosure timing of the acquired timely disclosure information, and the disclosure timing of timely disclosure information following the noted timely disclosure information.

Next, in step S18, the acquisition section 14 determines whether the stock price after the disclosure of the noted timely disclosure information has risen. When the price has risen, the process proceeds to step S20, and when the price has fallen, the process proceeds to step S22.

In step S20, the acquisition section 14 selectively acquires trading history information in the transaction category of a buying transaction among the trading history information in which the transaction date and time is included in the acquisition target period from the start point to the end point identified by the period identification section 12 in steps S14 and S16. On the other hand, in step S22, the acquisition section 14 selectively acquires trading history information in the transaction category of a selling transaction among the trading history information in which the transaction date and time is included in the acquisition target period from the start point to the end point identified by the period identification section 12 in steps S14 and S16.

Next, in step S24, the stockholder identification section 16 identifies the stockholder indicated by the user ID included in the trading history information in which the number of transactions is equal to or more than the predetermined number or the amount of transactions is equal to or more than the predetermined amount among the trading history information acquired by the acquisition section 14 in steps S20 or S22. Then, the stockholder identification section 16 outputs the information of the identified stockholder as the stockholder suspected of insider trading, and the inspection support processing ends.

As described above, according to the inspection support apparatus 10 of the first embodiment, the start point of the period during which the trading history information of stocks is acquired is identified based on at least one of the trend of the stock price before the disclosure timing of the timely disclosure information and the disclosure timing of the preceding timely disclosure information. In addition, the end point of the period during which the stock trading history information of the stock is acquired is identified based on at least one of the trend of the stock price after the disclosure timing of the timely disclosure information and the disclosure timing of the succeeding timely disclosure information. Then, the trading history information of the stock in the acquisition target period from the identified start point to the identified end point is acquired. As a result, it is possible to narrow down and acquire the trading history information of the transaction suspected of an illegal transaction. Thus, it is possible to support an inspection of the illegal transaction.

### Second Embodiment

Next, a second embodiment will be described. Note that in the inspection support apparatus according to the second embodiment, parts similar to those of the inspection support apparatus 10 according to the first embodiment are denoted by the same reference numerals, and a detailed description thereof will be omitted.

As depicted in FIG. 1, an inspection support apparatus 210 according to the second embodiment functionally includes a period identification section 212, an acquisition section 214, and a stockholder identification section (person identification section) 216.

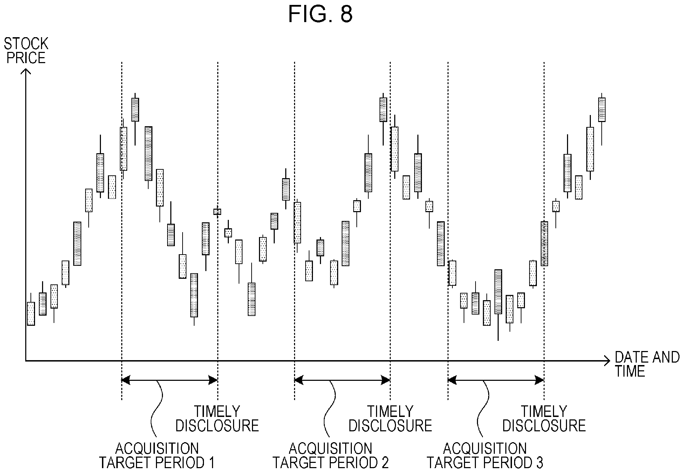

As in the period identification section 12 in the first embodiment, the period identification section 212 acquires from the stock price information DB 22 stock price information for a predetermined period of time about the company to be inspected, and acquires from the timely disclosure information DB 24 the timely disclosure information about the company to be inspected. At this time, when a plurality of pieces of timely disclosure information of the company to be inspected is acquired within a predetermined period, the period identification section 212 identifies the start point and the end point of the acquisition target period for each of the plurality of pieces of timely disclosure information. For example, as depicted in FIG. 8, when three pieces of timely disclosure information are acquired in a predetermined period, three acquisition target periods (acquisition target periods 1, 2, 3 in the example of FIG. 8) are identified.

The acquisition section 214 acquires from the trading history DB 26 the trading history information in which the transaction date and time is included in each acquisition target period for each of the acquisition target periods identified by the period identification section 212.

The stockholder identification section 216 identifies a stockholder (including a person) indicated by the user ID included in the trading history information of the stock indicating that the predetermined number of or the predetermined amount of or more stocks have been purchased and sold during each of the plurality of acquisition target periods. Specifically, the stockholder identification section 216 identifies a stockholder (including a person) who has purchased and sold the predetermined number of or the predetermined amount of or more stocks during the whole of, or a predetermined percentage or more of the plurality of acquisition target periods. For example, in the example of FIG. 8, in each of the plurality of pieces of trading history information corresponding to the respective acquisition target periods 1, 2, 3, the number of transactions in the trading history information whose user ID is "0001" is equal to or greater than a predetermined number or the amount of transactions in the trading history information whose user ID is "0001" is equal to or greater than a predetermined amount. In this case, the stockholder identification section 216 identifies a stockholder (including a person) whose user ID is "0001" as a stockholder (including a person) suspected of insider trading. In addition, for example, the stockholder identification section 216 may identify a stockholder (including a person) whose user ID corresponds to the trading history information in which the number of transactions is equal to or greater than a predetermined number or the amount of transactions is equal to or greater than a predetermined amount, for example, for each of the trading history information corresponding to two or more periods out of the acquisition target periods 1, 2, and 3.

The inspection support apparatus 210 may be implemented using, for example, the computer 40 depicted in FIG. 6. The storage section 43 of the computer 40 stores an inspection support program 250 for causing the computer 40 to function as the inspection support apparatus 210. The inspection support program 250 includes a period identification process 252, an acquisition process 254, and a stockholder identification process (person identification process) 256.

The CPU 41 reads out the inspection support program 250 from the storage section 43, develops it in the random-access memory 42, and sequentially executes the processes of the inspection support program 250. The CPU 41 operates as the period identification section 212 depicted in FIG. 1 by executing the period identification process 252. Further, the CPU 41 operates as the acquisition section 214 depicted in FIG. 1 by executing the acquisition process 254. In addition, the CPU 41 operates as the stockholder identification section 216 depicted in FIG. 1 by executing the stockholder identification process 256. As a result, the computer 40 that has executed the inspection support program 250 functions as the inspection support apparatus 210.

Note that the function implemented by the inspection support program 250 may also be implemented by, for example, a semiconductor integrated circuit, more specifically an ASIC or the like.

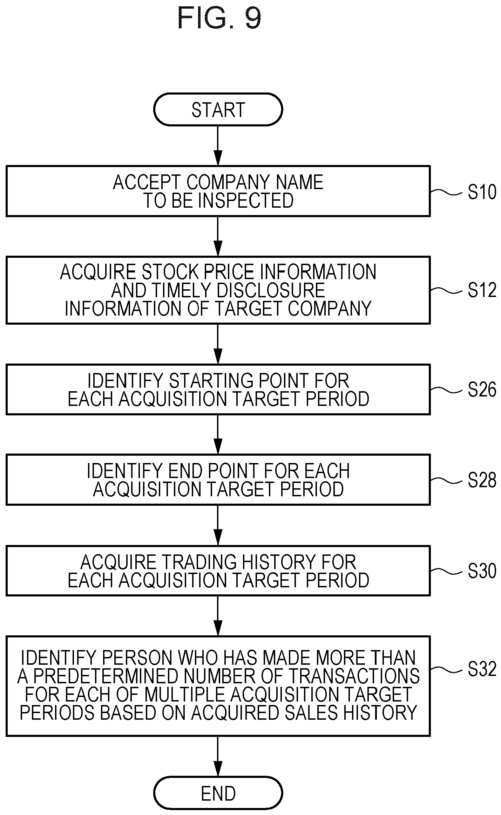

Next, the operation of the inspection support apparatus 210 according to the second embodiment will be described. When the company name of the company to be inspected is input to the inspection support apparatus 210 and the inspection support apparatus 210 is instructed to execute an inspection support process for insider trading, the inspection support apparatus 210 executes the inspection support processing depicted in FIG. 9. Note that in the inspection support processing according to the second embodiment, the same reference numerals are given to the same processing as the inspection support processing (FIG. 7) according to the first embodiment, and a detailed description thereof will be omitted.

When the stock price information and the timely disclosure information of the company to be inspected are acquired through steps S10 and S12, the process proceeds to step S26.

In step S26, when a plurality of pieces of timely disclosure information of the company to be inspected is acquired within a predetermined period, the period identification section 212 identifies the start point of the acquisition target period for each of the plurality of pieces of timely disclosure information. Similarly, in the next step S28, the period identification section 212 identifies the end point of the acquisition target period for each of the plurality of pieces of timely disclosure information.

Next, in step S30, the acquisition section 214 acquires from the trading history DB 26 the trading history information in which the transaction date and time is included in each acquisition target period for each of the acquisition target periods identified by the period identification section 212.

Next, in step S32, the stockholder identification section 216 identifies a stockholder (including a person) indicated by the user ID included in the trading history information of the stock indicating that the predetermined number of or the predetermined amount of or more stocks have been purchased and sold during the whole of, or a predetermined percentage or more of the plurality of acquisition target periods. Then, the stockholder identification section 216 outputs the information of the identified stockholder as the stockholder suspected of insider trading, and the inspection support processing ends.

As described above, according to the inspection support apparatus 210 of the second embodiment, when there is a plurality of acquisition target periods of the trading history information of the stock, a stockholder (including a person) who has purchased and sold the predetermined number of or the predetermined amount of or more stocks during the whole of, or a predetermined percentage or more of the plurality of acquisition target periods is identified. Since a stockholder (including a person) conducting an insider trading may conduct the insider transactions in a plurality of times, it is possible to avoid accidentally identifying a stockholder (including a person) whose one time transaction happens to have exceeded a predetermined number or a predetermined amount.

### Third Embodiment

Next, a third embodiment will be described. Note that in the inspection support apparatus according to the third embodiment, parts similar to those of the inspection support apparatus 10 according to the first embodiment are denoted by the same reference numerals, and a detailed description thereof will be omitted.

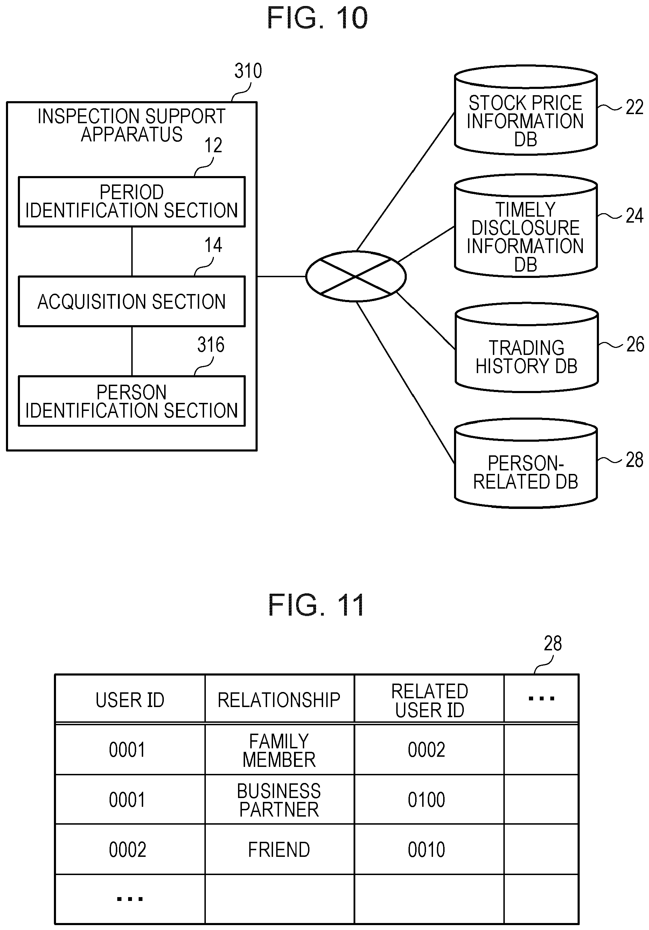

As depicted in FIG. 10, an inspection support apparatus 310 according to the third embodiment functionally includes a period identification section 12, an acquisition section 14, and a stockholder identification section (person identification section) 316. The inspection support apparatus 310 acquires information from each of the stock price information DB 22, the timely disclosure information DB 24, the trading history DB 26, and a stockholder-related DB 28, which are external database, via the network.

The stockholder-related DB 28 stores information indicating the relationship between users (stockholders conducting stock trading), and may be, for example, a database used in a Social Networking Service (SNS) and the like. FIG. 11 depicts an example of the stockholder-related DB 28. In the example of FIG. 11, a user ID (related user ID) of a stockholder (including a person) having the relationship with a stockholder (user) identified by the user ID is stored together with information (relationship) indicating the relationship between the two.

Note that the stockholder-related DB 28 is not limited to the external database. The stockholder-related DB 28 may be independently registered and managed by the inspection support apparatus 310. Further, information may be periodically acquired from an external database, and the stockholder-related DB 28 may be stored in a predetermined area of the inspection support apparatus 310.

As in the stockholder identification section 16 in the first embodiment, the stockholder identification section 316 identifies a stockholder (including a person) who has purchased and sold the predetermined number of or the predetermined amount of or more stocks based on the trading history information of the stock acquired by the acquisition section 14. Furthermore, the stockholder identification section 316 in the third embodiment identifies a stockholder (hereinafter referred to as a related stockholder) who has the relationship with an identified stockholder (including a person) and who traded stocks during the acquisition target period identified by the period identification section 12.

Specifically, the stockholder identification section 316 refers to the stockholder-related DB 28, and identifies the related user ID associated with the user ID of the identified stockholder. For example, in the case of referring to the stockholder-related DB 28 depicted in FIG. 11, when the user ID "0001" is identified based on the acquired trading history information of the stock, the stockholder identification section 316 identifies the related user IDs "0002" and "0100".

Note that the stockholder identification section 316 identifies the only related user ID having a specific relationship such as a related user ID whose relationship refers to, for example, a business partner using the information of the relationship of the stockholder-related DB 28. In addition, the stockholder identification section 316 may identify the related user ID further relating to the identified related user ID. For example, in the same example as above, when the user ID "0001" is identified, the related user IDs "0002" and "0100" are identified, and the related user ID "0010" relating to the related user ID "0002" is further identified.

When the trading history information acquired by the acquisition section 14 includes the trading history information of the identified related user ID, the stockholder identification section 316 identifies the stockholder identified by the related user ID as a related stockholder.

The inspection support apparatus 310 may be implemented using, for example, the computer 40 depicted in FIG. 6. The storage section 43 of the computer 40 stores an inspection support program 350 for causing the computer 40 to function as the inspection support apparatus 310. The inspection support program 350 includes the period identification process 52, the acquisition process 54, and a stockholder identification process (person identification process) 356.

The CPU 41 reads out the inspection support program 350 from the storage section 43, develops the inspection support program 350 in the random-access memory 42, and sequentially executes the processes of the inspection support program 350. The CPU 41 operates as the stockholder identification section 316 depicted in FIG. 10 by executing the stockholder identification process 356. The other processes are the same as those of the inspection support program 50 according to the first embodiment. As a result, the computer 40 that has executed the inspection support program 350 functions as the inspection support apparatus 310.

Note that the function implemented by the inspection support program 350 may also be implemented by, for example, a semiconductor integrated circuit, more specifically an ASIC or the like.

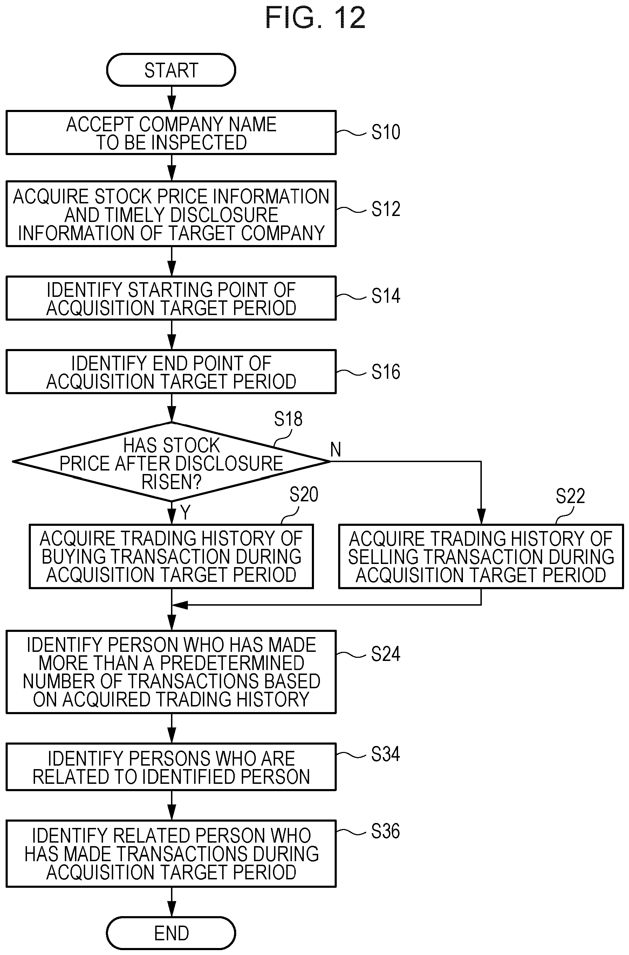

Next, the operation of the inspection support apparatus 310 according to the third embodiment will be described. When the company name of the company to be inspected is input to the inspection support apparatus 310 and the inspection support apparatus 310 is instructed to execute an inspection support process for insider trading, the inspection support apparatus 310 executes the inspection support processing depicted in FIG. 12. Note that in the inspection support processing according to the third embodiment, the same reference numerals are given to the same processes as the inspection support processing (FIG. 7) according to the first embodiment, and a detailed description thereof will be omitted.

After steps S10 to S24, when the user ID of a stockholder (including a person) suspected of insider trading for the company to be inspected is identified, the process proceeds to step S34.

In step S34, the stockholder identification section 316 refers to the stockholder-related DB 28, and identifies the related user ID associated with the user ID of the stockholder identified in step S24.

Next, in step S36, the stockholder identification section 316 determines whether the trading history information of the identified related user ID is included in the trading history information acquired by the acquisition section 14 in step S20 or S22. Then, when the trading history information of the identified related user ID is included, the stockholder identification section 316 identifies the stockholder identified by the related user ID identified in step S34 as a related stockholder. Then, the stockholder identification section 316 outputs the information of the stockholder identified in the above step S24 and the related stockholder identified in this step, and the inspection support processing is terminated.

As described above, the inspection support apparatus 310 according to the third embodiment identifies as the related stockholder also the stockholder who has the relationship with a stockholder (including a person) who has purchased and sold the predetermined number of or the predetermined amount of or more stocks during the acquisition target period, and who has purchased and sold the stock in the acquisition target period. As a result, it is possible to expand the scope of stockholders suspected of insider trading and conduct the inspection.

### Fourth Embodiment

Next, a fourth embodiment will be described. Note that in the inspection support apparatus according to the fourth embodiment, parts similar to those of the inspection support apparatus 10 according to the first embodiment or the inspection support apparatus 310 according to the third embodiment are denoted by the same reference numerals and detailed description is omitted.

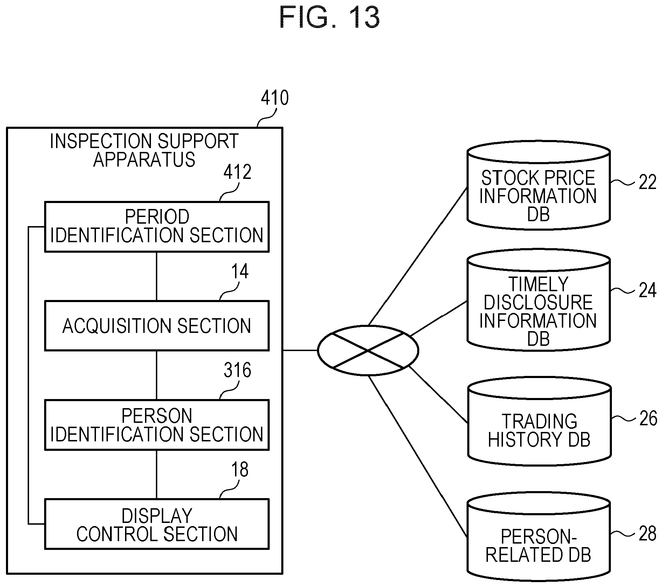

As depicted in FIG. 13, an inspection support apparatus 410 according to the fourth embodiment functionally includes a period identification section 412, the acquisition section 14, the stockholder identification section 316, and a display control section 18.

As in the period identification section 12 in the first embodiment, the period identification section 412 acquires from the stock price information DB 22 stock price information for a predetermined period of time about the company to be inspected, and acquires from the timely disclosure information DB 24 the timely disclosure information about the company to be inspected. In addition, the period identification section 412 accepts the date and time of the start point of the acquisition target period designated by a designation bar (details will be described later) displayed by the display control section 18. The period identification section 412 then identifies the period from the designated start point to the disclosure date and time of the timely disclosure information as the acquisition target period during which the stock trading history information is acquired.

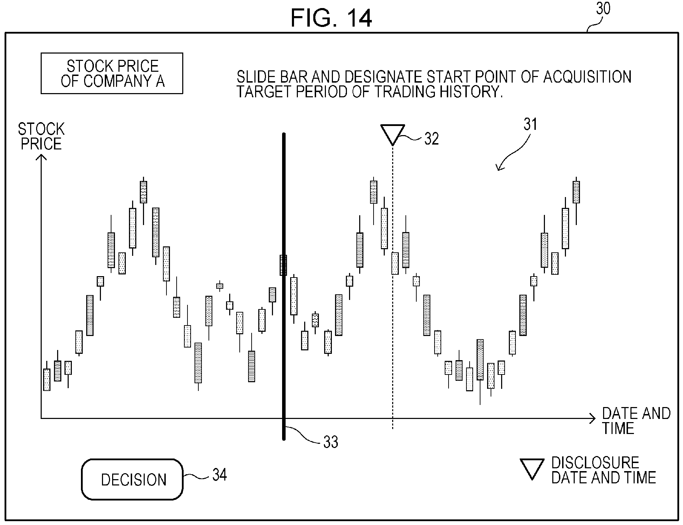

Based on the stock price information and the timely disclosure information acquired by the period identification section 412, the display control section 18 performs control so that the designation screen for accepting the designation of the start point of the acquisition target period is displayed on the display device (not depicted). FIG. 14 depicts an example of a designation screen 30. In the example of FIG. 14, the designation screen 30 includes a stock price chart 31 in which stock price information is graphed, a disclosure date and time mark 32 indicating the disclosure date and time of the timely disclosure information, a designation bar 33 for designating a start point, and a decision button 34 that is selected when determining the designation of the start point. Note that the designation bar 33 is an example of the time designation part of the present embodiment.

The display control section 18 displays the designation bar 33 so as to be slidable along the horizontal axis (date and time) in a period prior to the disclosure date and time of the timely disclosure information on the stock price chart 31. While checking the stock price chart 31, the user slides the designation bar 33 to a desired position and then selects the decision button 34. The display control section 18 notifies the period identification section 412 of the date and time, as the date and time of the start point, corresponding to the position of the designation bar 33 when the decision button 34 is selected.

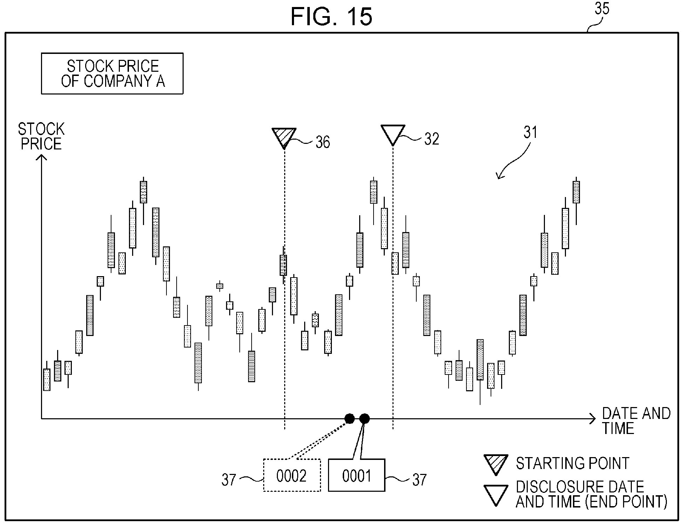

In addition, the display control section 18 performs control so that the identification screen indicating the situation of the transaction of the stockholder and the related stockholder identified by the stockholder identification section 316 is displayed on the display device (not depicted). FIG. 15 depicts an example of an identification screen 35. In the example of FIG. 15, the identification screen 35 includes the stock price chart 31, the disclosure date and time mark 32, a start point mark 36 indicating the date and time of the start point, a stockholder (person) mark 37 indicating the date and time at which the identified stockholder and the related stockholder made a transaction. In the example of FIG. 15, the stockholder mark 37 is a mark combining a black circle and a balloon of a user ID of a stockholder (including a person).

The display control section 18 displays a black circle at a position on the stock price chart 31 corresponding to the transaction date and time of the trading history information including the user IDs of the stockholder and the related stockholder identified by the stockholder identification section 316. Then, the display control section 18 displays the stockholder mark 37 by connecting the balloon that indicates the user ID of the stockholder or the related stockholder to the black circle. Note that in the example depicted in FIG. 15, a stockholder (including a person) who has purchased and sold the predetermined number of or the predetermined amount of or more stocks is represented by the balloon of the solid line and the related stockholder for this stockholder is represented by the balloon of the broken line. Note that the display manner of the stockholder mark 37 is not limited to the example depicted in FIG. 15.

In addition, when the stockholder mark 37 is selected, the display control section 18 may display the trading history information including the user ID corresponding to the selected stockholder mark 37 on a pop-up screen or the like.

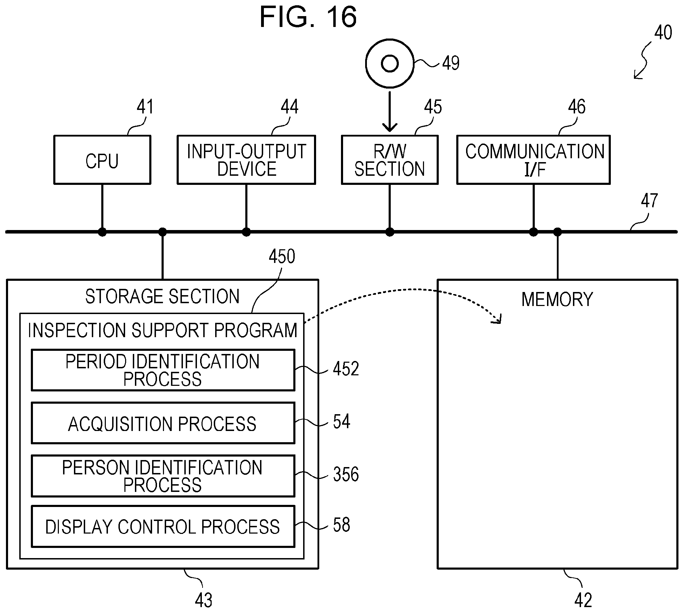

The inspection support apparatus 410 may be implemented using, for example, the computer 40 depicted in FIG. 16. The storage section 43 of the computer 40 stores an inspection support program 450 for causing the computer 40 to function as the inspection support apparatus 410. The inspection support program 450 includes a period identification process 452, the acquisition process 54, the stockholder identification process 356, and a display control process 58.

The CPU 41 reads out the inspection support program 450 from the storage section 43, develops the inspection support program 450 in the memory 42, and sequentially executes the processes of the inspection support program 450. The CPU 41 operates as the period identification section 412 depicted in FIG. 13 by executing the period identification process 452. In addition, the CPU 41 operates as the display control section 18 depicted in FIG. 13 by executing the display control process 58. The other processes are the same as the inspection support program 50 according to the first embodiment or the inspection support program 350 according to the third embodiment. As a result, the computer 40 that has executed the inspection support program 350 functions as the inspection support apparatus 410.

Note that the function implemented by the inspection support program 450 can be implemented by, for example, a semiconductor integrated circuit, more specifically, an ASIC or the like.

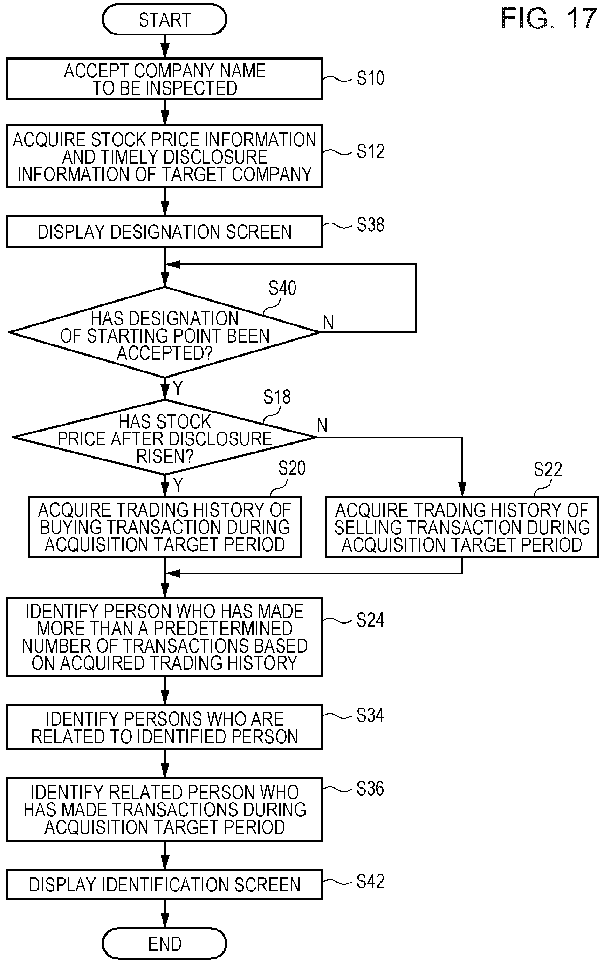

Next, the operation of the inspection support apparatus 410 according to the fourth embodiment will be described. When the company name of the company to be inspected is input to the inspection support apparatus 410 and the inspection support apparatus 410 is instructed to execute an inspection support process for insider trading, the inspection support apparatus 410 executes the inspection support processing depicted in FIG. 17. Note that in the inspection support processing according to the fourth embodiment, the same reference numerals are given to the same processes as the inspection support processing (FIG. 12) according to the third embodiment, and a detailed description thereof will be omitted.

When the stock price information and the timely disclosure information of the company to be inspected are acquired through steps S10 and S12, the process proceeds to step S38.

In step S38, the display control section 18 displays, for example, the designation screen 30 as depicted in FIG. 14. Specifically, as the designation screen 30, the display control section 18 graphs the stock price information acquired by the period identification section 412 to display the stock price chart 31 and displays the disclosure date and time mark 32 at a position corresponding to the disclosure date and time of the timely disclosure information on the stock price chart 31. In addition, the display control section 18 displays the designation bar 33 for designating the start point so that the display bar can slide along the horizontal axis (date and time) in a period prior to the disclosure date and time of the timely disclosure information on the stock price chart 31, and displays the decision button 34.

Next, in step S40, the display control section 18 determines whether designation of the start point has been accepted by determining whether the decision button 34 on the designation screen 30 has been selected. When the designation of the start point has been accepted, the display control section 18 notifies the period identification section 412 of the date and time, as the date and time of the start point, corresponding to the position of the designation bar 33 when the decision button 34 is selected, and the process proceeds to step S18. When designation of the start point is not accepted, the determination of this step is repeated.

Through steps S18 to S36, a stockholder (including a person) who has purchased and sold the predetermined number of or the predetermined amount of or more stocks during the acquisition target period, and a related stockholder who is relating to the above stockholder and who has traded stocks during the acquisition target period are identified.

Next, in step S42, the display control section 18 displays, for example, the identification screen 35 as depicted in FIG. 15. Specifically, the display control section 18 continuously displays the stock price chart 31 and the disclosure date and time mark 32 of the designation screen 30, and displays the start point mark 36 at a position corresponding to the date and time of the start point designated on the designation screen 30. The display control section 18 displays a black circle at a position on the stock price chart 31 corresponding to the transaction date and time of the trading history information including the user IDs of the identified stockholder and the related stockholder. Then, the display control section 18 displays the stockholder mark 37 by connecting the balloon that indicates the user ID of the stockholder or the related stockholder to the black circle. Upon completion of the display of the identification screen 35, the inspection support processing ends.

As described above, the inspection support apparatus 410 of the fourth embodiment provides, on the graph indicating a trend of stock prices, an interface for accepting designation of the start point according to the disclosure date and time of the timely disclosure information and the stock price trend. As a result, the acquisition target period may be identified by making full use of the experience and the like of the stockholder performing the inspection, whereby it is possible to acquire sufficient trading history information for inspection.

Note that in the first to third embodiments as well, the identification screen 35 as depicted in FIG. 15 may be displayed.

In addition, in each of the above-described embodiments, the case where the illegal transaction to be inspected is insider trading has been described. The embodiment is not limited to the case of insider trading. The acquisition target period of the trading history information may be identified based on the trend of the stock price before and after the disclosure of the timely disclosure information and the disclosure timing of the preceding or succeeding timely disclosure information in accordance with the content of the illegal transaction to be inspected.

In each of the above embodiments, the mode in which the inspection support programs 50, 250, 350, and 450 are prestored (preinstalled) in the storage section 43 has been described. The embodiment is not limited to this mode. The program according to the disclosed technique may also be provided in a form stored in a storage medium such as a CD-ROM, a DVD-ROM, a USB memory, or the like.

As an, the embodiments have the effect of being able to support an inspection of illegal transactions.

## Claims

1. A computer-readable recording medium storing a program that causes a computer to execute a process, the process comprising:
identifying a start point of an acquisition target period of a stock trading history of a specific company based on at least one of a trend of a stock price of the specific company prior to a timing of a specific-information disclosure in the specific company and a timing of an information disclosure prior to the specific information disclosure;
acquiring the stock trading history of the specific company within a period starting from the identified start point; and
referring to a storage section that stores trend information of a stock price of the specific company and a timing of information disclosure relating to the specific company, and selectively acquiring selling transaction information or buying transaction information of stocks of the specific company in accordance with a direction of fluctuations of the stock price of the specific company after the timing of the specific information disclosure.

2. The computer-readable recording medium of claim 1, the process further comprising identifying a stockholder who has sold or purchased a predetermined number of or a predetermined amount of or more stocks is identified based on the trading history of acquired stocks.

3. The computer-readable recording medium of claim 1, the process further comprising identifying a stockholder who has sold or purchased a predetermined number of or a predetermined amount of or more stocks is identified based on the acquired trading history of stocks.

4. The computer-readable recording medium of claim 2, wherein the identifying a stockholder includes identifying a stockholder corresponding to a trading history of stocks indicating that a predetermined number of or a predetermined amount of or more stocks have been sold or purchased in each of the plurality of acquisition target periods.

5. The computer-readable recording medium of claim 3, wherein the identifying a stockholder includes identifying a related stockholder who has sold or purchased stocks in the acquisition target period based on a trading history of stocks which have been acquired among stockholders relating to the identified stockholder.

6. The computer-readable recording medium of claim 5, the process further comprising outputting on a graph indicating a trend of stock prices at least one of a timing of the specific information disclosure, a timing at which the identified stockholder has sold or purchased stocks, and a timing at which the identified related stockholder has sold or purchased stocks.

7. An inspection support apparatus for an illegal transaction relating to a specific information disclosure, the inspection support apparatus comprising:
a storage section; and
a processor that
identifies a start point of an acquisition target period of a stock trading history of a specific company based on at least one of a trend of a stock price of the specific company prior to a timing of a specific information disclosure in the specific company and a timing of an information disclosure prior to the specific information disclosure; and
acquires a stock trading history of the specific company within a period starting from the identified start point,
wherein the processor refers to the storage section that stores trend information of a stock price of the specific company and a timing of information disclosure relating to the specific company, and selectively acquire selling transaction information or buying transaction information of stocks of the specific company in accordance with a direction of fluctuations of the stock price of the specific company after the timing of the specific information disclosure.

8. The inspection support apparatus of claim 7, wherein
the processor that identifies a stockholder who has sold or purchased a predetermined number of or a predetermined amount of or more stocks is identified based on the acquired trading history of stocks.

9. The inspection support apparatus of claim 7, wherein the processor identifies a stockholder corresponding to a trading history of stocks indicating that a predetermined number of or a predetermined amount of or more stocks have been sold or purchased in each of the plurality of acquisition target periods.

10. The inspection support apparatus of claim 8, wherein the processor identifies a related stockholder who has sold or purchased stocks in the acquisition target period based on a trading history of stocks which have been acquired among stockholders relating to the identified stockholder.

11. The inspection support apparatus of claim 10, further comprising the processor that outputs on a graph indicating a trend of stock prices at least one of a timing of the specific information disclosure, a timing at which the identified stockholder has sold or purchased stocks, and a timing at which the identified related stockholder has sold or purchased stocks.

12. An inspection support method for an illegal transaction relating to a specific information disclosure, the method being executed by a computer, the method comprising:
identifying a start point of an acquisition target period of a stock trading history of a specific company based on at least one of a trend of a stock price of the specific company prior to a timing of a specific information disclosure in the specific company and a timing of an information disclosure prior to the specific information disclosure;
acquiring the stock trading history of the specific company within a period starting from the identified start point.

13. The inspection supporting method of claim 12, further comprising referring to a storage section that stores trend information of a stock price of the specific company and a timing of information disclosure relating to the specific company, and selectively acquiring selling transaction information or buying transaction information of a stock of the specific company in accordance with a direction of fluctuations of the stock price of the specific company after the timing of the specific information disclosure.
